# EUROPÄISCHE PATENTSCHRIFT

(11) **EP 0 412 336 B1**
(45) Veröffentlichungstag und Bekanntmachung des Hinweises auf die Patenterteilung: **09.03.1994**
(21) Anmeldenummer: 90113907.1
(22) Anmeldetag: 20.07.1990
(51) Int. Cl.: C03C 8/14, C09D 1/00

(54) **Schadstofffreie orangefarbene Dekorfarbe**
Non-toxic orange-coloured decorating paints
Couleurs décoratives exemptes de produits toxiques de couleur orange

(30) Priorität: 09.08.1989 DE 3926335
(43) Veröffentlichungstag der Anmeldung: 13.02.1991
(73) Patentinhaber: Degussa Aktiengesellschaft, 60311 Frankfurt (DE)
(72) Erfinder: Dorer, Kai, D-6056 Heusenstamm (DE); Jarnicki, Holger, D-6384 Schmitten 2 (DE)

(56) Entgegenhaltungen:
- AT-A- 317 758
- CHEMICAL ABSTRACTS, Band 110, Nr. 10, 15. Mai 1989, Seite 329, Zusammenfassung Nr. 178391f, Columbus, Ohio, US; & PL-A-141 766 (J. ADAMCZYK) 30-06-1988
- DATA DERWENT WORLD PATENT INDEX, accession no. 76-20232x (11), Derwent Publications Ltd, London, GB; & SU-A-464 544 (I.G. KHIZANISHVILI)
- WORLD SURFACE COATINGS ABSTRACTS, Band 47, Nr. 382, Seite 286; & SU-A-357 173 (I.G. KHIZANISHVILI)

## Beschreibung

Die Erfindung betrifft eine schadstofffreie orangefarbene Dekorfarbe, bestehend aus 15 bis 30 Gew.-% eines orangefarbenen Pigments und 70 bis 85 Gew.-% einer Glasfritte.

Dekorfarben bestehen im wesentlichen aus einem Farbpigment und einer Glasfritte und dienen zum Färben von Porzellan, Steinzeug und anderen keramischen Erzeugnissen. Insbesondere werden sie zum Färben von Fliesen verwendet.

Orangefarbene Dekorfarben bestehen meist aus Kadmiumsulfoseleniden als Farbpigment und blei- und cadmiumhaltigen Glasfritten. Eine solche Glasfritte besteht beispielsweise aus 15 Gew.-% PbO, 4 Gew.-% CdO, 10 Gew.-% Alkalioxid, 8 Gew.-% Al₂O₃, 48 Gew.-% SiO₂ und 15 Gew.-% B₂O₃. Diese Dekorfarben sind zwar gegen schwache Säuren und Laugen beständig, werden jedoch von starken Säuren und Laugen zum Teil angegriffen, wobei sich toxische Blei- und Cadmiumverbindungen aus der Glasur herauslösen.

Das Dokument Chemical Abstracts Band 110, Nr. 10, Seite 329 (15. Mai 1989) richtet sich auf eine Glasfritte, welche bis zu 10,2 Gew.-% farbgebender Komponenten enthalten kann. Bei den genannten gelben und roten Farbkörpern handelt es sich um Verbindungen von Cd, S und Se, also um toxische Stoffe. Die Glasfritte ist zudem zinkhaltig.

Aus dem WPI/Derwent Dokument No. 76 - 20232a (11) sind als dunkelorange bezeichnete Pigmente bekannt. Diese Farbkörper enthalten als farbgebende Bestandteile 9,7 bis 11,0 Gew.-% Cr₂O₃ und 0,3 bis 0,4 Gew.-% Fe₂O₃. Dekorfarben aus einer Glasfritte und einem Pigment werden in diesem Dokument nicht offenbart.

Es war daher Aufgabe der vorliegenden Erfindung, eine schadstofffreie orangefarbene Dekorfarbe zu entwickeln, bestehend aus 15 bis 30 Gew.-% eines orangefarbenen Pigments und 70 bis 85 Gew.-% einer Glasfritte, die frei von toxischen Schwermetallen ist.

Diese Aufgabe wird erfindungsgemäß dadurch gelöst, daß das Pigment aus 10 - 13 Gew. % Alkalioxid, 10 bis 14 Gew. % Eisen(III)-oxid, 30 bis 35 Gew. % Aluminiumoxid und 40 bis 45 Gew. % Siliziumdioxid und die Glasfritte aus 35 bis 60 Gew. % Siliziumdioxid, 15 -35 Gew. % Boroxid, 3 - 8 Gew. % Zirkoniumoxid, 2 - 8 Gew. % Aluminiumoxid, 10 - 18 Gew. % Natrium- und/oder Kaliumoxid und 2 - 6 Gew. % Lithiumoxid bestehen.

Vorzugsweise verwendet man orangefarbene Pigmente der Zusammensetzung 42 bis 45 Gew. % Siliziumdioxid, 31 bis 33 Gew. % Aluminiumoxid, 10 bis 13 Gew. % Alkalioxid und 11 bis 12 Gew. % Eisenoxid. Außerdem ist es vorteilhaft, eine Glasfritte der Zusammensetzung 50 bis 58 Gew. % Siliziumdioxid, 18 -21 Gew. % Boroxid, 3,5 bis 5 Gew. % Zirkoniumoxid, 4,5 - 6 Gew. % Aluminiumoxid, 10 - 13 Gew. % Natrium- und/oder Kaliumoxid und 2 - 4 Gew. % Lithiumoxid einzusetzen.

Da diese Pigmente und Glasfritten keine toxisch bedenklichen Schwermetalle enthalten, können aus ihnen auch keine toxischen Schermetallverbindungen herausgelöst werden.

Das Einbrennen dieser Dekorfarben erfolgt bei 650 bis 1000° C während 4 bis 0,5 Stunden.

Folgendes Beispiel soll die Erfindung näher erläutern:
20 Gew. % eines orangefarbenen Pigments der Zusammensetzung 43 Gew. % SiO₂, 33 Gew. % Al₂O₃, 12 Gew. % R₂O und 12 Gew. % Fe₂O₃ wird mit 80 Gew. % einer Glasfritte der Zusammensetzung 56 Gew. % SiO₂, 20 Gew. % B₂O₃, 4,5 Gew. % ZrO₂, 6 Gew. % Al₂O₃, 11 Gew. % Na₂O und K₂O und 2,5 Gew. % Li₂O gut gemischt und 0,5 Stunden bei 1000° auf einer Fliese eingebrannt. Man erhält ein orangefarbenes Dekor, das säure- und laugenbeständig ist.

## Patentansprüche

1. Schadstofffreie orangefarbene Dekorfarbe, bestehend aus 15 bis 30 Gew. % eines orangefarbenen Pigments und 70 bis 85 Gew. % einer Glasfritte,
dadurch gekennzeichnet,
daß das Pigment aus 10 bis 13 Gew. % Alkalioxid, 10 bis 14 Gew. % Eisen(III)-oxid, 30 bis 35 Gew.% Aluminiumoxid und 40 bis 45 Gew. % Siliziumdioxid und die Glasfritte aus 35 bis 60 Gew. % Siliziumdioxid, 15 bis 35 Gew. % Boroxid, 3 bis 8 Gew. % Zirkoniumoxid, 2 bis 8 Gew. % Aluminiumoxid, 10 bis 18 Gew. % Natrium- und/oder Kaliumoxid und 2 bis 6 Gew. % Lithiumoxid bestehen.

2. Dekorfarbe nach Anspruch 1,
dadurch gekennzeichnet,
daß das Pigment aus 40 bis 45 Gew. % Siliziumdioxid, 31 bis 33 Gew. % Aluminiumoxid, 10 bis 13 Gew, % Alkalioxid und 11 bis 12 Gew. % Eisen(III)oxid besteht.

3. Dekorfarbe nach Anspruch 1 oder 2,
dadurch gekennzeichnet,
daß die Glastritte aus 50 bis 58 Gew. % Siliziumdioxid, 18 bis 21 Gew. % Boroxid, 3,5 bis 5 Gew.% Zirkoniumoxid, 4,5 bis 6 Gew. % Aluminiumoxid, 10 bis 13 Gew. % Natrium- und/oder Kaliumoxid und 2 bis 4 Gew. % Lithiumoxid besteht.

## Claims

1. A pollutant-free orange-coloured decorative paint consisting of 15 to 30 wt.% of an orange pigment and 70 to 85% of a glass frit, characterised in that the pigment consists of 10 to 13 wt.% alkali-metal oxide, 10 to 14 wt.% iron (III) oxide, 30 to 35 wt.% aluminium oxide and 40 to 45% silicon dioxide and the glass frit consists of 35 to 60 wt.% silicon dioxide, 15 to 35 wt.% boron oxide, 3 to 8 wt.% zirconium oxide, 2 to 8 wt.% aluminium oxide, 10 to 18 wt.% sodium and/or potassium oxide and 2 to 6 wt.% lithium oxide.

2. A decorative paint according to claim 1, characterised in that the pigment consists of 40 to 45 wt.% silicon dioxide, 31 to 33 wt.% aluminium oxide, 10 to 13 wt.% alkali-metal oxide and 11 to 12 wt.% of iron (III) oxide.

3. A decorative paint according to claim 1 or 2, characterised in that the glass frit consists of 50 to 58 wt.% silicon dioxide, 18 to 21 wt.% boron oxide, 3.5 to 5 wt.% zirconium oxide, 4.5 to 6 wt.% aluminium oxide, 10 to 13 wt.% sodium and/or potassium oxide and 2 to 4 wt.% lithium oxide.

## Revendications

1. Couleur décorative orange sans produit toxique constituée de 15 à 30 % en poids d'un pigment orange et de 70 à 85 % en poids d'une fritte de verre, caractérisée en ce que le pigment comprend 10 à 13 % en poids d'oxyde alcalin, 10 à 14 % en poids d'oxyde de fer (III), 30 à 35 % en poids d'oxyde d'aluminium et 40 à 45 % en poids de dioxyde de silicium et la fritte de verre comprend 35 à 60 % en poids de dioxyde de silicium, 15 à 35 % en poids d'oxyde de bore, 3 à 8 % en poids d'oxyde de zirconium, 2 à 8 % en poids d'oxyde d'aluminium, 10 à 18 % en poids d'oxyde de sodium et/ou d'oxyde de potassium et 2 à 6 % en poids d'oxyde de lithium.

2. Couleur décorative selon la revendication 1, caractérisée en ce que le pigment est constitué de 40 à 45 % en poids de dioxyde de silicium, 31 à 33 % en poids d'oxyde d'aluminium, 10 à 13 % en poids d'oxyde alcalin et 11 à 12 % en poids d'oxyde de fer (III).

3. Couleur décorative selon la revendication 1 ou 2, caractérisée en ce que la fritte de verre est constituée de 50 à 58 % en poids de dioxyde de silicium, 18 à 21 % en poids d'oxyde de bore, 3,5 à 5 % en poids d'oxyde de zirconium, 4,5 à 6 % en poids d'oxyde d'aluminium, 10 à 13 % en poids d'oxyde de sodium et/ou de potassium et 2 à 4 % en poids d'oxyde de lithium.
